# FASCICULE DE BREVET EUROPEEN

(11) **EP 1 769 504 B1**
(45) Date de publication et mention de la délivrance du brevet: **09.04.2008**
(21) Numéro de dépôt: 05791956.5
(22) Date de dépôt: 15.07.2005
(51) Int. Cl.: G11B 33/04

(54) **CONDITIONNEMENT POUR UN SUPPORT D'ENREGISTREMENT NUMERIQUE EN FORME DE DISQUE**
PLATTENFÖRMIGE VERPACKUNG FÜR EIN DIGITALES AUFZEICHNUNGSMEDIUM
DISC-SHAPED PACKAGE FOR A DIGITAL RECORDING MEDIUM

(30) Priorité: 15.07.2004 FR 0451537
(43) Date de publication de la demande: 04.04.2007
(73) Titulaire: Mip Packaging - Moulage Industriel de Perseigne, 72600 LA FRESNAYE-SUR-CHEDOUET (FR)
(72) Inventeur: CROUAN, Alain, F-72000 LE MANS (FR)
(74) Mandataire: Busnel, Jean-Benoît
(86) Numéro de dépôt international: PCT/FR2005/050588
(87) Numéro de publication internationale: WO 2006/016092

(56) Documents cités:
- EP-A- 1 128 387
- WO-A-20/04024600
- DE-A1- 10 131 717
- US-A- 774 037
- US-A- 5 533 615
- US-A- 5 690 218
- US-A- 6 155 417
- US-A1- 2002 033 348
- US-A1- 2002 100 701
- US-A1- 2002 139 701
- US-B1- 6 454 090

## Description

La présente invention concerne le domaine des emballages pour des supports d'enregistrement numérique en forme de disque, tels que des CD, des DVD ou des mini-CD.

Dans l'état de la technique, on connaît le principe général des emballages comprenant un téton de centrage sur lequel le disque est clippé. Les tétons de centrages présentent généralement plusieurs pétales déformables. Ils sont formés soit par moulage du fond d'un emballage en matière plastique, soit sous forme de pièce collée sur un support en carton.

A titre d'exemple, le brevet FR2810442 décrit un boîtier pour DVD, CD ou VCD constitué d'un corps, d'un couvercle, d'un mécanisme de charnière moulé et comprenant un élément saillant annulaire. L'élément saillant s'étend vers le haut à partir du corps pour supporter un disque. Cet élément saillant est formé par une collerette protubérante présentant des ailettes flexibles se logeant dans le trou de centrage d'un disque. Ces pétales sont fragiles et cassantes et peuvent se briser lors du transport ou de la mise en place ou du retrait du disque. Les pétales brisés se déplacent alors entre l'emballage et le disque et peuvent rayer la surface du disque.

Le coût de fabrication d'un tel boîtier est élevé car l'élément saillant doit être moulé dans un moule complexe, avec des tolérances de fabrication assez faibles. Ces pétales sont généralement sensibles à la température et n'assurent pas toujours le maintien efficace du disque.

Par ailleurs, lorsque la collerette est collée sur le fond du boîtier, ils peuvent s'arracher et être ingurgités par un enfant.

On a également proposé dans le brevet FR2730087 un boîtier en matière plastique souple dont le fond présente trois picots dressés verticalement par rapport au fond. Le disque est calé entre ces picots. Cette solution n'est pas très satisfaisante car le disque n'est pas maintenu correctement. De plus, les picots s'usent rapidement.

Dans le brevet US6443300, il est décrit un boîtier pour disque lequel comprend notamment une base présentant une cavité pour recevoir un ou plusieurs disques, et des pattes de retenue de disques reliées à ladite base. Ces pattes, qui s'étendent sur les parties périphériques d'un ou plusieurs disques disposés dans la cavité et maintiennent le ou lesdits disques dans ladite cavité (position de fermeture), peuvent être déplacées vers une position de libération de façon à permettre le retrait du ou des disques de ladite c0avité.

Un tel boîtier présente cependant des inconvénients. En effet, la libération du (ou des) disque(s) nécessite une intervention manuelle directement sur les pattes de retenue, favorisant ainsi les risques de rayures par l'utilisateur lors du déplacement des pattes vers leur position de libération. En outre, l'opération consistant à déplacer ces pattes vers leur position de libération reste relativement peu pratique. En effet, cette opération nécessite soit une action successive de libération sur chacune desdites pattes, soit l'utilisation des deux mains de l'utilisateur pour une ouverture simultanée de deux pattes.

On connaît également par le brevet FR2846774 un conditionnement pour un support d'enregistrement numérique en forme de disque, formé par un plateau présentant des moyens de centrage dudit disque, caractérisé en ce que le plateau présente au moins deux épaulements radiaux disposés de part et d'autre d'une ligne médiane de positionnement du disque, lesdits épaulements radiaux étant définis pour recouvrir au repos une zone marginale du disque et pour définir avec le fond du plateau une fente d'une hauteur sensiblement égale à l'épaisseur du disque.

Les documents US 2002/139701, EP 1 128 387 et US 6 454 090 décrivent des plateaux de conditionnement pour disques numériques.

Ces plateaux présentent des moyens de maintien du disque formés par des épaulements radiaux dont au moins l'un est mobile entre une position de verrouillage où il recouvre une zone marginale du disque et une position de libération obtenue par action sur une touche d'éjection.

Cependant, dans ces documents, la liaison entre la touche d'éjection et le plateau n'est pas satisfaisante car elle ne permet pas d'assurer à la fois une réception et un maintien du disque ainsi qu'un retrait automatique sans risques sérieux de détérioration.

Le retrait du disque n'est pas toujours aisé, et la présente invention vise à proposer un conditionnement facilitant le retrait du disque de son logement.

A cet effet, l'invention concerne, selon son acception la plus générale, un conditionnement pour support d'enregistrement numérique en forme de disque, formé par un plateau présentant des moyens de maintien dudit disque formé par au moins deux épaulements radiaux définis pour recouvrir au repos une zone marginale du disque l'un au moins desdits épaulements radiaux étant mobile entre une position au repos où il recouvre la zone marginale du disque, et une position de libération où ledit épaulement libère ladite zone marginale caractérisé en ce que ledit épaulement mobile de verrouillage comprend une touche d'éjection portée par deux lames latérales assurant la liaison avec le plateau et une lame centrale venant en appui élastique contre la face inférieure du disque et s'étendant au-dessus desdites lames de liaison.

De préférence, lesdites lames de liaison prolongent le fond du plateau, selon une direction radiale.

Selon une variante, le fond du plateau comporte au moins un intercalaire formant une zone d'appui de la face inférieure du disque, la distance entre le plan passant par ladite zone d'appui de l'intercalaire et le plan passant par la surface intérieure des épaulements correspondant sensiblement à l'épaisseur d'un disque.

Selon une autre variante, la hauteur de l'intercalaire délimite un espace pour le positionnement de la lame centrale.

Selon une variante, le plateau présente une cavité cylindrique d'un diamètre légèrement supérieur au diamètre dudit disque pour recevoir le disque.

Préférentiellement, ladite cavité cylindrique est prolongée, du côté opposé à l'un desdits épaulements, par une zone de préhension formant un creux débouchant dans ladite cavité.

Avantageusement, l'un des épaulements recouvre une zone de ladite cavité, la dimension de ladite zone étant inférieure à 5% du diamètre du disque.

Selon une variante avantageuse, l'un des épaulements est formé par un prolongement radial recouvrant une partie de la cavité, sur une distance inférieure à 5% du diamètre du disque.

Selon une autre variante, le conditionnement comprend deux épaulements de verrouillage disposés symétriquement dans un secteur angulaire de la cavité compris entre 10° et 45° relativement au diamètre transversal.

Selon encore une autre variante, le conditionnement comprend un épaulement de calage pourvu d'une fente dans laquelle est introduit le bord marginal du disque et d'une face supérieure inclinée vers le fond et vers l'extérieur de la cavité.

De préférence, l'épaulement de calage est situé sur l'axe longitudinal de la cavité.

L'invention sera mieux comprise à la lecture de la description qui suit, se référant aux dessins annexés concernant des exemples non limitatifs de réalisation, où:
- la figure 1 représente une vue de dessus d'un exemple de réalisation du conditionnement selon l'invention,
- la figure 2 représente une vue en coupe AA dudit conditionnement,
- la figure 3 représente une vue en perspective dudit conditionnement,
- la figure 4 représente une vue de dessous dudit conditionnement.

Le conditionnement est constitué par un plateau (1) présentant un logement de forme sensiblement cylindrique pour recevoir un disque (3).

Le plateau (1) est réalisé en matière plastique ou en tout autre matériau. Il présente un logement formé par une cavité (2) présentant une bordure annulaire et un fond central (32) dont le diamètre correspond sensiblement à celui du disque (3). Il est prolongé par deux logements de préhension (8) présentant une largeur d'environ 20 millimètres permettant de saisir le bord du disque (3) avec un doigt. Ces logements (8) présentent une section hémisphérique, le fond du logement débouchant sous la surface inférieure du disque.

Le conditionnement présente trois épaulements radiaux (4 à 6) réduisant localement le rayon de la cavité à une dimension inférieure au rayon du disque (3). Ces épaulements (4 à 6) sont disposés transversalement et débordent pour recouvrir une zone périphérique de la cavité (2).

La face supérieure des épaulements (4 à 6) présente un biseau orienté vers le fond (32) facilitant l'introduction et le guidage du disque vers son logement.

Les épaulements (4 à 6) font saillie radialement en recouvrant la cavité sur un à deux millimètres, pour assurer un maintien efficace du disque (3) dans la cavité (2), et une insertion et un retrait facile du disque par déformation élastique d'une partie du plateau (1).

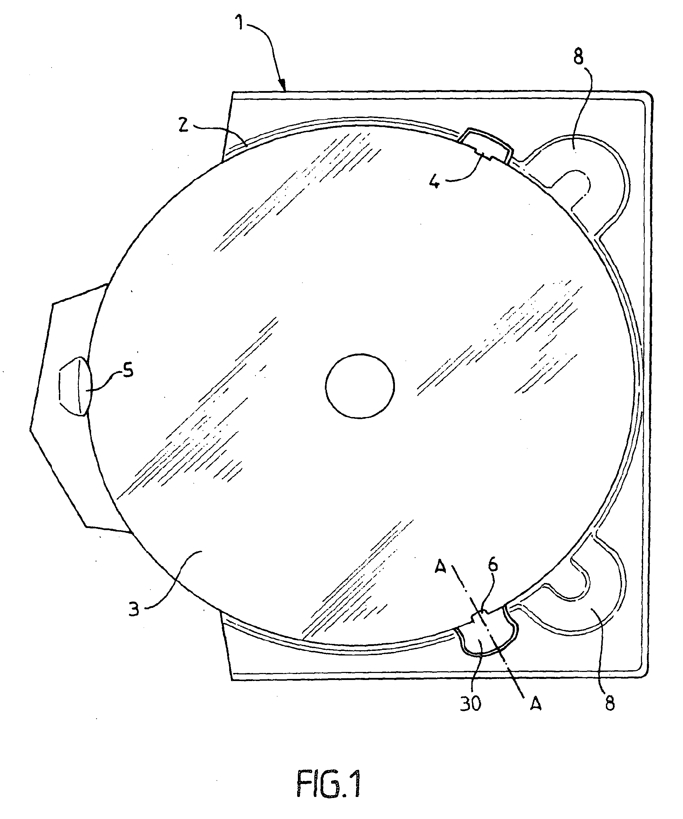

Comme représenté sur la figure 1, au moins l'un des épaulements (6) assure le verrouillage du disque. Cet épaulement est prolongé par une touche d'éjection (30) s'étendant à l'extérieur de la cavité (2). Elle est placée dans une découpe du plateau située à la périphérie de la cavité (2), et peut donc s'enfoncer par rapport à la surface de cette bordure périphérique.

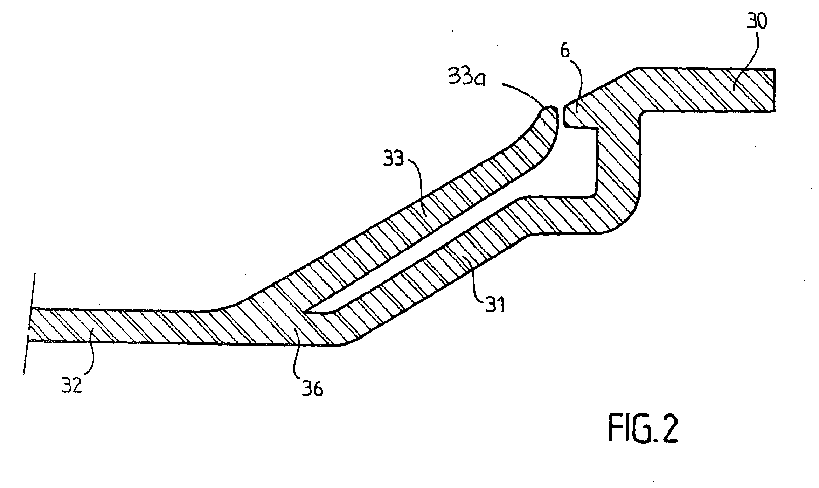

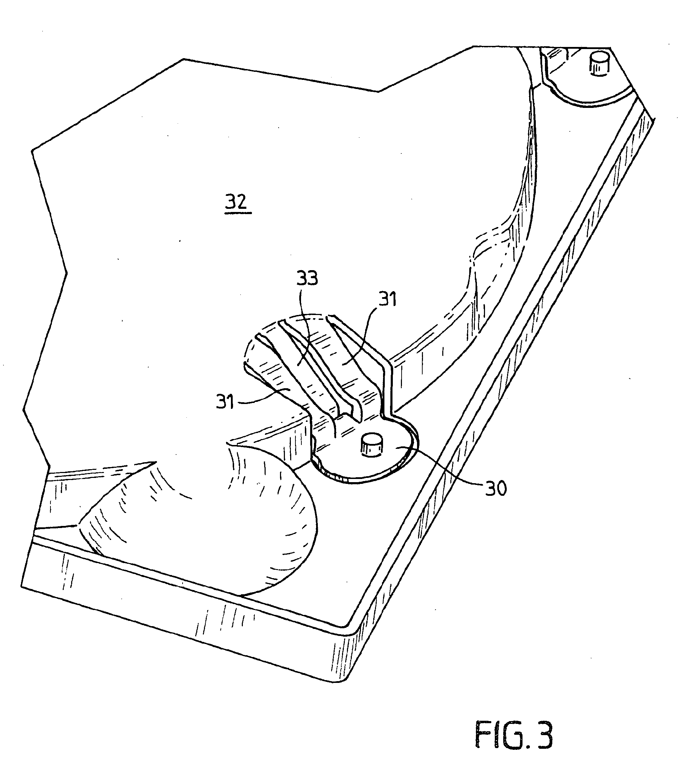

Comme représenté en détail sur les figures 2 et 3, la touche d'éjection (30) est portée par deux lames élastiques (31) de liaison s'étendant radialement et de façon inclinée jusqu'au fond (32) de la cavité (2) du plateau (1) avec lequel elles sont solidaires.

Cette touche (30) est mobile : lorsque l'utilisateur exerce une pression verticale (perpendiculairement à la surface du disque) les lames de liaison (31) se déforment et la touche bascule élastiquement par rapport à la zone (36) de raccordement avec le fond (32). En basculant, l'épaulement (6) est écarté du disque (3), ce dernier est alors libéré et peut être retiré.

Pour faciliter le retrait, une lame centrale flexible (33) formant ressort est placée entre les deux lames latérales (31) et vient exercer, via son extrémité libre (33a), une pression sous la surface inférieure du disque (3) pour le maintenir sous l'épaulement (6). Ainsi, le disque est éjecté dès la libération de l'épaulement (6) par rappel élastique de la lame centrale en position haute de repos.

A cet effet, l'extrémité (33a) de la lame ressort (33) est recourbée vers le haut et affleure le bord intérieur de l'épaulement (6) comme représenté sur la figure 2 en ménageant une gorge intercalaire de faible largeur.

La lame ressort (33) s'étend dans un plan qui est parallèle au plan commun des deux autres lames (31) mais légèrement décalé vers le haut.

C'est donc la lame centrale (33) qui reçoit l'appui du disque en priorité.

Pour permettre le débattement nécessaire aux mouvements des lames (31, 33), le fond du disque présente des plots (35) formant des entretoises sur lesquelles repose le bord inférieur du disque.

L'insertion du disque dans son logement se fait en appuyant sur sa face supérieure, le disque vient alors en appui sur la butée (5) et se centre automatiquement entre les épaulements (4) et (6) avant de se bloquer à la manière d'un encliquetage dans la cavité (2).

Pour sortir le disque, on appuie sur la touche (30) qui pivote par déformation des lames de liaison (31) ce qui libère le disque et entraîne son éjection automatique par action de la lame ressort (33).

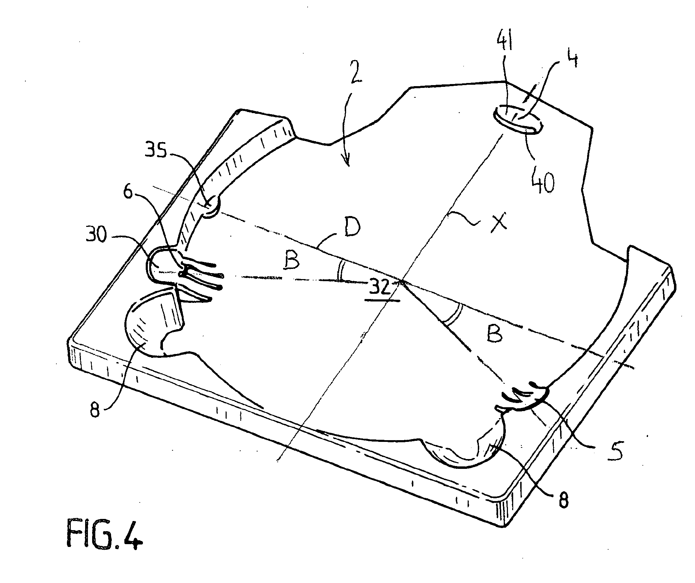

Selon, une variante représentée sur la figure 4, l'un des épaulements (4) délimite avec le fond (32) et, du côté de la cavité (2), une fente (40) de calage dans laquelle vient s'introduire le bord du disque opposé à celui qui est engagé dans les autres épaulements (5,6) assurant le verrouillage. L'épaulement (4) présente une face supérieure inclinée (41) vers le fond et vers l'extérieur de la cavité (2).

De cette manière, le disque repose selon un plan incliné dans la cavité (2); le rebord le plus haut du disque étant maintenu à distance du fond (32) de la cavité (2) par engagement dans les épaulements (5,6) à touche d'éjection (30) tandis que le rebord le plus bas pénètre dans la fente (40) de l'épaulement (4) de calage, en contact avec le fond (32).

De préférence, comme représenté sur la figure 4, les épaulements (5, 6) de verrouillage du disque sont disposés dans un secteur angulaire B compris entre 10° et 45° relativement au diamètre transversal D de la cavité (2) passant par les plots (35) et symétriquement de part et d'autre de l'axe longitudinal X de la cavité (2). L'épaulement (4) de calage est quant à lui situé sur l'axe longitudinal X.

Cette variante est plus particulièrement adaptée à un conditionnement pour plusieurs disques.

Dans ce cas, les disques se chevauchent partiellement et la cavité (2) se prolonge latéralement par au moins une seconde cavité adjacente (représentée partiellement sur la figure 4) pourvue d'épaulements selon l'invention et destinée à recevoir au moins un autre disque.

Le plateau (1) est formé par moulage ou éventuellement par thermoformage d'une matière plastique transparente. Il présente une cavité (2) destinée comme dans les exemples précédents à recevoir un disque. Cette cavité est de forme ovale, allongé selon l'axe passant par le logement (8) pour le passage du doigt.

Le plateau présente un rebord formant un cadre périphérique. Il, contribue à la rigidité du plateau en limitant les déformations par torsion, et permet ainsi de réduire l'épaisseur du plateau (1).

Il présente par ailleurs quatre zones pour le collage du plateau sur une feuille de carton ou un étui.

L'invention est décrite dans ce qui précède à titre d'exemple. Il est entendu que l'homme du métier est à même de réaliser différentes variantes de l'invention sans pour autant sortir du cadre du brevet.

## Revendications

1. Conditionnement pour support d'enregistrement numérique en forme de disque (3), formé par un plateau (1) présentant des moyens de maintien dudit disque (3) formé par au moins deux épaulements radiaux (4, 5, 6) définis pour recouvrir au repos une zone marginale du disque (3), l'un au moins desdits épaulements radiaux étant mobile entre une position de verrouillage où il recouvre la zone marginale du disque, et une position de libération où ledit épaulement de libère ladite zone marginale **caractérisé en ce que** ledit épaulement mobile de verrouillage (5, 6) comprend une touche d'éjection (30) portée par deux lames latérales (31) assurant la liaison avec le plateau (1) et une lame centrale (33) venant en appui élastique contre la face inférieure du disque (3) et s'étendant au-dessus desdites lames de liaison (31).

2. Conditionnement selon la revendication 1 **caractérisé en ce que** lesdites lames de liaison (31) prolongent le fond (32) du plateau, selon une direction radiale.

3. Conditionnement selon la revendication 1 ou 2, **caractérisé en ce que** le fond (32) du plateau comporte au moins un intercalaire (35) formant une zone d'appui de la face inférieure du disque, la distance entre le plan passant par ladite zone d'appui de l'intercalaire (35) et le plan passant par la surface intérieure des épaulements (4 à 6) correspondant sensiblement à l'épaisseur d'un disque (3).

4. Conditionnement selon l'une des revendications précédentes, **caractérisé en ce que** le plateau (1) présente une cavité (2) cylindrique pour recevoir le disque (3).

5. Conditionnement selon l'une quelconque des revendications précédentes, **caractérisé en ce que** ladite cavité (2) présente un diamètre légèrement supérieur au diamètre dudit disque (3).

6. Conditionnement selon l'une quelconque des revendications précédentes, **caractérisé en ce que** ladite cavité (2) cylindrique est prolongée, du côté opposé à l'un desdits épaulements (4 à 6), par une zone de préhension (8) formant un creux débouchant dans ladite cavité (2).

7. Conditionnement selon l'une quelconque des revendications précédentes, **caractérisé en ce que** l'un des épaulements (4 à 6) recouvre une zone de ladite cavité (2), la dimension de ladite zone étant inférieure à 5% du diamètre du disque (3).

8. Conditionnement selon l'une quelconque des revendications précédentes, **caractérisé en ce que** l'un des épaulements, (4 à 6) est formé par un prolongement radial recouvrant une partie de la cavité (2), sur une distance inférieure à 5% du diamètre du disque (3).

9. Conditionnement selon l'une des revendications précédentes **caractérisé en ce qu'**il comprend deux épaulements (5, 6) de verrouillage disposés symétriquement dans un secteur angulaire B de la cavité (2) compris entre 10° et 45° relativement au diamètre transversal D.

10. Conditionnement selon l'une des revendications précédentes **caractérisé en ce qu'**il comprend un épaulement de calage (4) pourvu d'une fente (40) dans laquelle est introduit le bord marginal du disque (3) et d'une face supérieure (41) inclinée vers le fond (32) et vers l'extérieur de la cavité (2).

11. Conditionnement selon la revendication 10 **caractérisé en ce que** l'épaulement (4) de calage est situé sur l'axe longitudinal X de la cavité (2).

## Claims

1. A packaging for a digital recording medium in the shape of a disc (3), composed of a platter (1) having disc (3) holding means composed of at least two radial shoulders (4, 5, 6) defined for overlapping, at rest, a margin area of the disc (3), at least one of said radial shoulders being movable between a locked position where it overlaps the disc margin area and a released position where said shoulder releases said margin area, **characterized in that** said locking mobile shoulder (5, 6) includes an ejection key (30) supported by two side leaves (31) providing the link with the platter (1) and a central leaf (33) coming to elastically rest against the lower face of the disc (3) and extending above said linking leaves (31).

2. A packaging according to claim 1, **characterized in that** said linking leaves (31) extend the bottom (32) of the platter along a radial direction.

3. A packaging according to claim 1 or 2, **characterized in that** the bottom (32) of the platter includes at least one separator (35) forming a resting area for the lower face of the disc, the distance between the plane going through said separator resting area (35) and the plane going through the internal surface of the shoulders (46) substantially corresponding to the thickness of a disc (3).

4. A packaging according to one of the preceding claims, **characterized in that** the platter (1) has a cylindrical recess (2) for receiving the disc (3).

5. A packaging according to any one of the preceding claims, **characterized in that** said recess (2) has a diameter slightly greater than the diameter of said disc (3).

6. A packaging according to any one of the preceding claims, **characterized in that** said cylindrical recess (2) is extended, on the side opposite one of said shoulders (4 to 6), by a gripping area forming a cavity opening onto said recess (2).

7. A packaging according to any one of the preceding claims, **characterized in that** one of the shoulders (4 to 6) overlaps an area of said recess (2), the size of said area being lower than 5% of the disc (3) diameter.

8. A packaging according to any one of the preceding claims, **characterized in that** one of said shoulders (4 to 6) is formed by a radial extension overlapping a part of the recess (2) on a distance lower than 5% of the disc (3) diameter.

9. A packaging according to one of the preceding claims, **characterized in that** it includes two locking shoulders (5, 6) positioned symmetrically in an angular sector B of the recess (2), between 10° and 45° with respect to the transversal diameter D.

10. A packaging according to one of the preceding claims, **characterized in that** it includes a wedging shoulder (4) provided with a slot (40) wherein the margin edge of the disc (3) is introduced and an upper face (41) inclined towards the bottom (32) and the outside of the recess (2).

11. A packaging according to claim 10, **characterized in that** the wedging shoulder is positioned along the longitudinal axis X of the recess (2).

## Patentansprüche

1. Verpackung für Träger von digitalen Aufzeichnungen in Form einer Scheibe (3), die aus einem Teller (1) gebildet wird, der Mittel zur Halterung der besagten Scheibe (3) aufweist, die aus mindestens drei radialen Schultern (4, 5, 6) gebildet werden, die so definiert sind, daß sie in Ruhestellung eine Randzone der Scheibe (3) abdecken, wobei mindestens eine der besagten radialen Schultern zwischen einer Sperrposition, wo sie die Randzone der Scheibe abdeckt, und einer Freigabeposition beweglich ist, wo die besagte Schulter die besagte Randzone freigibt, **dadurch gekennzeichnet, daß** die besagte bewegliche Sperrschulter (5, 6) eine Auswurftaste (30) umfaßt, die von zwei seitlichen Blättern (31) getragen wird, die die Verbindung mit dem Teller (1) sicherstellen, und ein zentrales Blatt (33), das elastisch an der Unterseite der Scheibe (3) anliegt und sich über den besagten Verbindungsblättern (31) erstreckt.

2. Verpackung nach Anspruch 1, **dadurch gekennzeichnet, daß** die besagten Verbindungsblätter (31) den Boden (32) des Tellers in einer radialen Richtung verlängern.

3. Verpackung nach Anspruch 1 oder 2, **dadurch gekennzeichnet, daß** der Boden (32) des Tellers mindestens eine Einlage (35) umfaßt, die eine Auflagezone der Unterseite der Scheibe bildet, wobei die Entfernung zwischen der durch die Innenfläche der Schultern (4 bis 6) hindurchgehenden Ebene deutlich der Dicke einer Scheibe (3) entspricht.

4. Verpackung nach einem beliebigen der vorstehenden Ansprüche, **dadurch gekennzeichnet, daß** der Teller (1) eine zylinderförmige Austiefung (2) zur Aufnahme der Scheibe (3) aufweist.

5. Verpackung nach einem beliebigen der vorstehenden Ansprüche, **dadurch gekennzeichnet, daß** die besagte Austiefung (2) einen leicht größeren Durchmesser als derjenige der besagten Scheibe (3) aufweist.

6. Verpackung nach einem beliebigen der vorstehenden Ansprüche, **dadurch gekennzeichnet, daß** die besagte zylinderförmige Austiefung (2) an der zu einer den Schultern (4 bis 6) entgegengesetzten Seite durch eine Greifzone (8) verlängert ist, die eine zur besagten Austiefung (2) führende Hohlstelle bildet.

7. Verpackung nach einem beliebigen der vorstehenden Ansprüche, **dadurch gekennzeichnet, daß** eine der Schultern (4 bis 6) eine Zone der besagten Austiefung (2) überdeckt, wobei die Abmessung der besagten Zone weniger als 5% des Durchmessers der Scheibe (3) ausmacht.

8. Verpackung nach einem beliebigen der vorstehenden Ansprüche, **dadurch gekennzeichnet, daß** eine der Schultern (4 bis 6) durch eine laterale Verlängerung gebildet wird, die einen Teil der Austiefung (2) überdeckt, und dies auf eine Entfernung von unter 5% des Durchmessers der Scheibe (3).

9. Verpackung nach einem beliebigen der vorstehenden Ansprüche, **dadurch gekennzeichnet, daß** sie zwei Sperrschultern (5, 6) umfaßt, die symmetrisch in einem Winkelabschnitt B der Austiefung (2) angeordnet sind, der zwischen 10° und 45° im Verhältnis zum Querdurchmesser D liegt.

10. Verpackung nach einem beliebigen der vorstehenden Ansprüche, **dadurch gekennzeichnet, daß** sie eine Anliegeschulter (4) umfaßt, die mit einem Schlitz (40) versehen ist, in den die Randkante der Scheibe (3) eingeführt wird, und mit einer Oberseite (41), die zum Boden (32) und nach außerhalb der Austiefung (2) geneigt ist.

11. Verpackung nach Anspruch 10, **dadurch gekennzeichnet, daß** die Anliegeschulter (4) auf der Längsachse X der Austiefung (2) liegt.
